# EUROPÄISCHE PATENTANMELDUNG

(11) **EP 0 589 249 A2**
(43) Veröffentlichungstag der Anmeldung: **30.03.1994**
(21) Anmeldenummer: 93113963.8
(22) Anmeldetag: 31.08.1993
(51) Int. Cl.: G06F 9/44

(54) **Programmgesteuertes ISDN-Kommunikationssystem mit wenigstens einem objektorientierten Systemprogrammmodul**

(30) Priorität: 24.09.1992 DE 4232052
(71) Anmelder: SIEMENS AKTIENGESELLSCHAFT, D-80333 München (DE)
(72) Erfinder: Günther, Wolfgang Dipl.-Math., D-81476 München (DE); Nierwetberg, Johannes Dr., D-82008 Unterhaching (DE)

(57) **Zusammenfassung**

In einer programmgesteuerten Einrichtung, insbesondere einem ISDN-Kommunikationssystem ist wenigstens ein Systemprogrammodul nach Prinzipien objektorientierter Programmierung erstellt. Eine Vielzahl von objektbezogenen Strukturelementen sind für eine Vielzahl von Vorgängen verfügbar, wobei die Strukturelemente hinsichtlich ihres Freiheitsgrades bei Aufrufen anderer Strukturelemente, d.h. hinsichtlich ihrer "Benutzbeziehungen" einer von vier Strukturelementemengen zugeordnet sind. Durch diese Zuordnung wird die Zahl der möglichen Schnittstellen zwischen den Objekten auf ein Minimum reduziert, wodurch eine gute Wartbarkeit und Testbarkeit des Softwaresystems erzielt wird.

## Beschreibung

Bekannte ISDN-Kommunikationssysteme bestehen aus klar umrissenen Funktionsbausteinen mit standardisierten Schnittstellen. Durch eine Funktionenaufteilung auf verschiedene Steuerrechner wird erreicht, daß eine Anpassung an unterschiedliche Aufgaben und die Einführung neuer Funktions- und Leistungsmerkmale ohne Einfluß auf die Systemstruktur bleibt.

In einem Sonderheft "Diensteintegrierendes Digitalnetz ISDN", Telcom Report 8, 1985, Siemens AG, ist als ein solches Kommunikationssystem das "Siemens" Vermittlungssystem "EWSD" in den wesentlichen Punkten beschrieben.

Sowohl die Hardwarestruktur als auch die Softwarestruktur des Vermittlungssystems sind nach modularen Gesichtspunkten gegliedert. Die Software, also die programmtechnische Komponente des Vermittlungssystems kann in die Systemprogrammodule - Betriebssystem, Vermittlungstechnik, Zeichengabeübermittlung, Sicherungstechnik und Betriebstechnik - unterteilt werden.

Während Betriebssystemfunktionen anwendungsunabhängig sind, stellt die Zeichengabeübermittlung ein ISDN-spezifisches Subsystem dar. Das Systemprogrammodul der Vermittlungstechnik erbringt die eigentlichen Leistungen für die Benutzeroberfläche der Endgeräte bzw. für die Schnittstellen zu den verschiedenen Netzen.

Im Bereich des Vermittlungstechnik-Systemprogrammodules kommt es auf Grund von noch zu erwartenden Standardisierungsaktivitäten besonders darauf an, Änderungen und Ergänzungen ohne großen Aufwand vornehmen zu können und dabei die an das System gestellten Echtzeitanforderungen zu erfüllen.

In der deutschen Patentanmeldung mit dem amtlichen Aktenzeichen P 42 10 137.9 (internes Aktenzeichen 92 P 1142 DE) wird eine Einteilung von Klassen, den Strukturelementen objektorierentierter Programmsysteme, nach ihren 'Vererbungsbeziehungen' vorgeschlagen, die zu Standardklassen und Anwendungsklassen führt.

Standardklassen zeichnen sich dadurch aus, daß sie in mehreren Systemprogrammodulen eingesetzt werden können. Sie stellen Verallgemeinerungen dar, von denen Anwendungsklassen abgeleitet werden können. Bei den Standardklassen können zwei Arten unterschieden werden:
- Generische Klassen, von denen die Anwendungsklassen in Form von generischen Ausprägungen abgeleitet werden und
- virtuelle Klassen, von denen die Anwendungsklassen durch Bildung von Unterklassen unter Nutzung der Vererbung abgeleitet werden.

Die Anwendungsklassen hingegen repräsentieren Einheiten, wie sie für die Anwendungswelt eines Kommunikationssystems typisch sind.

Aufgabe der vorliegenden Erfindung ist es, für Systemprogrammodule einer programmgesteuerten Einrichtung, insbesondere eines ISDN-Kommunikationssystems, eine weitere Strukturierung vorzunehmen, mit der die Testbarkeit und Wartbarkeit, die insbesondere im Hinblick auf zukünftige Ergänzungen und Änderungen von erheblicher Bedeutung ist, optimiert wird.

Gelöst wird diese Aufgabe erfindungsgemäß durch die im Patentanspruch 1 angegebenen Merkmale.

Die Programmerstellung der Systemprogrammodule des Kommunikationssystems erfolgt nach den Prinzipien der objektorientierten Programmierung. Allgemeine Informationen zu dieser besonderen Programmiermethode und deren Regeln sind z.B. aus Mayer, B.: "Object oriented software construction", Prentice Hall, Englewood Cliffs, New York, 1988; oder aus Fraunheim, B. et al: "Objektorientierte Programmierung" (C++-Programmierkurs, Teil 1 ... Teil 4, Elektronik 1990, Heft 22...25) zu entnehmen.

Anders als bei der herkömmlichen prozeduralen Methode, bei der zwei voneinander getrennte Strukturelemente, nämlich Daten, die irgendwelche Informationen darstellen und Programmprozeduren, bei deren Abarbeitung die Daten manipuliert und zur Informationsver- und -bearbeitung benutzt werden, existieren in einem objektorientierten System nur Strukturelemente, die aus einer Einheit von Daten und Programmprozeduren (Methoden) bestehen, und nach außen hin ein abgeschlossenes Gebilde darstellen. Ein solches Gebilde wird allgemein als Objekt bezeichnet.

Ein nach den Prinzipien objektorientierter Programmierung erstelltes Systemprogrammodul stellt eine Vielzahl von Anwendungsfunktionen zur Verfügung, die jeweils eine spezifische Aufgabe, z.B. den Verbindungsaufbau oder die Ruf- und Signalisierungsabwicklung erledigen. Jede dieser Anwendungsfunktionen, die mittels eines sogenannten Anreizes aktivierbar sind, ist mit mehreren Objekten (objektbezogene Strukturelemente) realisiert, die ihrerseits gewissermaßen Detailfunktionen ausführen. Die meisten Objekte stehen dabei mehreren Anwendungsfunktionen zur Verfügung.

Prinzipiell können Objekte andere Objekte beauftragen ("benutzen"), d.h. sie können die Abarbeitung einer Methode
eines anderen Objektes veranlassen.

In jedem nach den Prinzipien objektorientierter Programmierung erstellten Systemprogrammodul wird für jeden auftretenden Vorgang, (z.B. eine jeweilige teilnehmerindividuelle Anforderung zum Verbindungsaufbau), eine zur Erledigung von Anforderungen dieser Art vorgesehene Anwendungsfunktion aktiviert. Individuell für diesen Vorgang werden dann von den, zur Implementierung dieser Anwendungungsfunktion dienenden Objekten Instanzen gebildet, die dem jeweiligen Vorgang zugeordnet werden und im allgemeinen solange bestehen bleiben, bis der betreffende Vorgang abgeschlossen ist (z.B. eine Verbindung wieder getrennt wird).

Die Erfindung sieht vor, die in solchen (d.h. nach Prinzipien objektorientierter Programmierung erstellten) Systemprogrammodulen eingerichteten Objekte vier Teilmengen - im übertragenen Sinne auch als Schichten bezeichenbar - zuzuordnen, wobei je Teilmenge, die während des Programmlaufs zugelassenen Kommunikationsbeziehungen zu anderen Objekten derselben oder einer anderen Teilmenge festgelegt werden. Als Kommunikationsbeziehungen werden dabei das Beauftragen eines anderen Objektes verstanden.

Betrachtet man den Zusammenhang zu der in der eingangs genannten deutschen Patentanmeldung vorgeschlagenen Einteilung von Klassen nach ihren "Vererbungsbeziehungen", so ist zu erwähnen, daß "Benutztbeziehungen" nur zwischen Klassen (Objekten) bestehen, von denen auch Instanzen gebildet werden. Somit tauchen generische Standardklassen bei den "Benutztbeziehungen" nicht auf, denn von generischen Einheiten können keine Instanzen mittels des Kommandos "NEW" (von der objektorientierten Programmiersprache vorgegeben), sondern nur Ausprägungen in Form von Klassen gebildet werden. Ebenso verhält es sich bei den virtuellen Standardklassen, bei denen die Instanziierung von der Programmiersprache her verboten ist.

Die Aufteilung der Objekte gemäß der Erfindung ist außer für die Software von Kommunikationssystemen generell für jede Art von Prozeßsteuerungssoftware geeignet, insbesondere wenn umfangreiche Steuerungsaufgaben erfüllt werden müssen und die Software einem Benutzersystem nicht direkt zugänglich und sichtbar ist.

Die vier Teilmengen (Schichten) werden mit Trigger-, Controller-, Responder Agent- und Responder-Schicht bezeichnet. Die Trigger-Schicht bildet gewissermaßen die Außenhaut des Softwaresystems und setzt externe Anreize in intern verarbeitbare Anreize um. Die Controller-Schicht enthält die Steuerlogik des Systems, während in der Responder Agent- und in der Responder-Schicht die Datenhaltung sämtlicher, das System beschreibender Daten vorgenommen wird.

Durch die Festlegung der zulässigen Kommunikationsbeziehungen der einzelnen Objekte wird die Zahl der möglichen Schnittstellen zwischen den Objekten auf ein Minimum reduziert, wodurch eine gute Wartbarkeit und Testbarkeit des Softwaresystems erzielt wird.

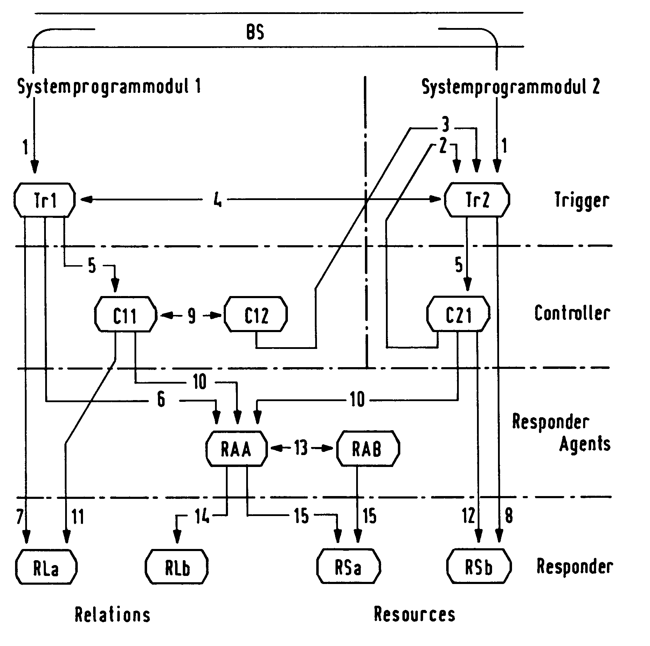

Ein Ausführungsbeispiel der Erfindung wird im folgenden anhand der Zeichnung näher erläutert.

Die Figur zeigt eine symbolische Darstellung zur Veranschaulichung von Kommunikationsbeziehungen zwischen den, den vier verschiedenen Teilmengen (Schichten) zugeordneten Objekten.

Die vorgenommene Zuordnung der Objekte zu den Teilmengen orientiert sich an dem für ein jeweiliges Objekt geltenden Freiheitsgrad, Beziehungen zu anderen Objekten aufzubauen. Bei diesen Beziehungen handelt es sich um sogenannte "Benutztbeziehungen" zwischen zwei Objekten, wobei unter dem Ausdruck "ein Objekt a benutzt ein Objekt b" zu verstehen ist, daß eine Instanz des Objektes a eine Prozedur (Methode) einer Instanz des Objektes b aufruft.

Die vier Teilmengen (in der Figur untereinander durch waagrecht-punktierte Linien voneinander getrennt) lassen sich sowohl von der Funktion ihrer Objekte als auch nach den möglichen "Benutztbeziehungen" zwischen teilmengenindividuellen Objekten und zu teilmengen-fremden Objekten gut gegeneinander abgrenzen.

Die vier Teilmengen (Schichten) werden als Trigger-, Controller-, Responder Agent-, und Responder-Schicht bezeichnet, wobei durch diese Reihenfolge auch ein jeweiliger hierarchischer Rang zum Ausdruck gebracht werden soll.

Lediglich zur Vereinfachung werden im folgenden die Objekte der Trigger-Schicht als Trigger, die Objekte der Controller-Schicht als Controller, die Objekte der Responder Agent-Schicht als Responder Agents und die Objekte der Responder-Schicht als Responder bezeichnet.

Ein Trigger Tr1, Tr2 ist der Ansprechpartner für die Außenwelt eines jeweiligen Systemprogrammoduls (z.B. für die Sicherungstechnik oder die Vermittlungstechnik),
die die interne Objektstruktur dieses Systemprogrammoduls nicht kennt. Trigger Tr1, Tr2 übernehmen vom Betriebssystem BS externe Anreize (z.B. Endgeräte-Nachrichten und Peripherie-Meldungen) und interne Anreize 2, 3 aus anderen Systemprogrammodulen (z.B. Intermodul-Nachrichten zwischen der Vermittlungstechnik und der Sicherungstechnik) und leiten sie an einen zuständigen Controller C11, C21 weiter. Nachdem die Systemprogrammodule normalerweise konkurrierend und mit unterschiedlicher Dringlichkeit ablaufen, sind Trigger aus Sicht des Betriebssystems i.a. "Prozesse". Da die Außenwelt in der Regel nur genau einen Ansprechpartner in einem jeweiligen Systemprogrammodul haben will, existiert von Triggern normalerweise jeweils nur eine Instanz. Ein Trigger darf "Benutztbeziehungen" nur zu Controllern des eigenen Systemprogrammoduls haben, beim Zugriff aus Responder Agents und Responder besteht jedoch keine Einschränkung.

Controller C11, C12, C21 enthalten die Steuerlogik eines Systemprogrammoduls. In der Vermittlungstechnik haben Controller den Charakter von endlichen Zustandsautomaten und lassen sich gut mit SDL-Prozessdiagrammen (Specification and Description Language) beschreiben. Für jeden zu steuernden Vorgang kann ein Controller instanziiert werden. Da in einem Systemprogrammodul unter Umständen sehr viele Vorgänge zu steuern sind, kann es auch sehr viele Instanzen eines Controllers geben. Sofern die Kommunikation zu einem Controller asynchron sein muß, sind die Controller aus Sicht des Betriebssystems BS auch "Prozesse".

Controller dürfen "Benutztbeziehungen" nur zu Controllern des eigenen Systemprogrammoduls haben. Beim Zugriff auf Trigger, Responder Agents und Responder besteht dagegen keine Einschränkung.

Responder Agents RAA, RAB dienen zur Verwaltung von System-Resourcen. Sie nehmen Aufträge der Controller entgegen und vergeben Unteraufträge an andere Responder Agents und an Responder. Responder Agents haben "Benutztbeziehungen" zu anderen Responder Agents und zu Respondern.

Responder RLa, RLb, RSa, RSb sind Objekte, die keine "Benutztbeziehungen" haben, d.h. sie rufen selbst keine Prozeduren (Methoden) bei anderen Objekten auf. Wurden von ihnen Ergebnisse erarbeitet, werden diese ausschließlich über Methoden-Parameter an die Auftraggeber zurückgegeben. Die Responder lassen sich in zwei Teilmengen untergliedern:
- Relations RLa, RLb, in denen die Beziehungen zwischen Größen der Außenwelt und den zugehörigen Objekten, wie auch zwischen Objekten verwaltet werden, und
- Resources RSa, RSb, die physikalisch oder logisch vorhandene Einrichtungen der Vermittlungstechnik, die bei der Steuerung von Abläufen benötigt werden, repräsentieren.

In der Figur sind die für ein Systemprogrammodul 1 (z.B. Vermittlungstechnik) und ein Systemprogrammodul 2 (z. B. Sicherungstechnik) zur Verfügung stehenden Objekte aufgeführt. Im Falle des Systemprogrammoduls 1 erhält der Trigger TR1 einen externen Anreiz 1 und kann selbst einen Aufruf 4 an den Trigger TR2 des Systemprogrammoduls 2 oder/und einen Aufruf 5 an den Controller C11 des Systemprogrammoduls 1 oder/und einen Aufruf 6 an einen Responder Agent RAA oder/und einen Aufruf 7 an ein Responder RLa absenden.

Der Controller C11 des Systemprogrammoduls 1 kann einen Aufruf 9 an einen weiteren Controller C12 des Systemprogrammoduls 1 abgeben oder/und einen Aufruf 10 an den Responder Agent RAA oder/und einen Aufruf 11 an den Responder RLa senden.

Der weitere Controller C12 des Systemprogrammoduls 1 kann einen Anreiz 3 an den Trigger TR2 des Systemprogrammoduls 2 senden. Der Trigger TR2 des Systemprogrammoduls 2 kann einen externen Anreiz 1 vom Betriebssystem BS und/oder einen Anreiz 3 vom Controller C12 und/oder einen Anreiz 2 von einem Controller C21 des Systemprogrammoduls 2 erhalten. Der Trigger TR2 kann einen Aufruf 4 an den Trigger TR1 des Systemprogrammoduls 1 und/oder einen Aufruf 5 an den Controller C21 des Systemprogrammoduls 2 und/oder einen Aufruf 8 an einen Responder RSb senden.

Der Controller C21 des Systemprogrammoduls 2 kann einen Aufruf 10 an den Responder Agent RAA und/oder einen Aufruf 12 an den Responder RSb abgeben. Der Responder Agent RAA kann einen Aufruf 13 an einen Responder Agent RAB absenden, der wiederum einen Aufruf 15 an einen Responder RSa zuleiten kann. Der Responder Agent RAA kann außerdem einen Aufruf 14 an einen Responder RLb und/oder einen Aufruf 15 an einen Responder RSa absenden.

## Patentansprüche

1. Programmgesteuerte Einrichtung, insbesondere ISDN-Kommunikationssystem, mit wenigstens einem nach Prinzipien objektorientierter Programmierung erstellten Systemprogrammodul, das eine Vielzahl von objektbezogenen Strukturelemten zur Implementierung unterschiedlicher Anwendungsfunktionen aufweist, die jeweils für eine Vielzahl von Vorgängen verfügbar sind, wobei die objektbezogenen Strukturelemente hinsichtlich ihres Freiheitsgrades bei Aufrufen anderer objektbezogener Strukturelemente jeweils einer von vier Strukturelementemengen zugeordnet sind und jedem Systemprogrammodul als Schnittstelle zu diesem ein Strukturelement (Tr1, Tr2) der ersten Strukturelementemenge (Trigger) zugeordnet ist,
- dem Anreize zur Ausführung von Anwendungsfunktionen für einen jeweiligen Vorgang von einem Betriebssystem (BS) oder von anderen Systemprogrammodulen zugeleitet werden,
- von dem Methoden anderer Strukturelemente (Tr1, Tr2) der ersten Strukturelementemenge (Trigger) aufrufbar sind,
- von dem Methoden von Instanzen von, dem gleichen Systemprogrammodul zugeordneten, Strukturelementen (C11, C21) der zweiten Strukturelementemenge (Controller) aufrufbar sind,
- von dem Methoden von Instanzen von Strukturelementen der dritten und vierten Strukturelementemenge (Responder-Agents; Responder) aufrufbar sind
und jedem Systemprogrammodul zur logischen Steuerung desselben wenigstens ein Strukturelement (C11, C12, C31) der zweiten Strukturelementemenge (Controller) zugeordnet ist,
- von dem zu jedem Vorgang eine Instanz erzeugbar ist,
- von dem Anreize zu Strukturelementen (Tr2) der ersten Strukturelementemenge (Trigger) erzeugbar sind,
- von dem Methoden von Instanzen von, dem gleichen Systemprogrammodul zugeordneten, Strukturelementen (C12) der zweiten Strukturelementemenge (Controller) aufrufbar sind,
- von dem Methoden von Instanzen von Strukturelementen der dritten und vierten Strukturelementemenge (Responder Agents, Responder) aufrufbar sind
und mit Strukturelementen (RAA, RAB) der dritten Strukturelementemenge (Responder Agents) zur Koordinierung des Aufrufes von Methoden von Instanzen von Strukturelementen (RLa,RLb,RSa,RSb) der vierten Strukturelementemenge (Responder)
- von denen Methoden von Instanzen anderer Strukturelemente der dritten Strukturelementemenge aufrufbar sind,
- von denen Methoden von Instanzen von Strukturelementen der vierten Strukturelementemenge (Responder) aufrufbar sind
und mit Strukturelementen (RLa,RLb,RSa,RSb) der vierten Strukturelementemenge (Responder) zur Verwaltung von Größen-Beziehungen und zur Repräsentation physikalischer oder logischer Einrichtungen
- von denen keine Methode bei anderen Strukturelementen aufgerufen werden.
